# EUROPEAN PATENT SPECIFICATION

(11) **EP 3 963 864 B1**
(45) Date of publication and mention of the grant of the patent: **15.04.2026**
(21) Application number: 19927333.5
(22) Date of filing: 30.04.2019
(51) Int. Cl.: H04L 67/303, H04L 67/56, H04W 8/22

(54) **EXCHANGING CAPABILITY INFORMATION**
AUSTAUSCH VON KAPAZITÄTSINFORMATIONEN
ÉCHANGE D'INFORMATIONS DE CAPACITÉ

(43) Date of publication of application: 09.03.2022
(73) Proprietor: Nokia Technologies Oy, 02610 Espoo (FI)
(72) Inventor: HE, Jing, Beijing 100102 (CN); ALI, Amaanat, 02250 Espoo (FI)
(74) Representative: Mudge, Kevin
(86) International application number: PCT/CN2019/085378
(87) International publication number: WO 2020/220353

(56) References cited:
- WO-A1-2013/185651
- CN-A- 101 355 797
- CN-A- 103 052 121
- CN-A- 106 332 237
- VIVO: "Solution for how to transfer the UE Capability ID", vol. SA WG2, no. Dongguan, P. R. China; 20181015 - 20181019, 9 October 2018 (2018-10-09), XP051539191, Retrieved from the Internet <URL:http://www.3gpp.org/ftp/tsg%5Fsa/WG2%5FArch/TSGS2%5F129%5FDongguan/Docs/S2%2D1810198%2Ezip> [retrieved on 20181009]
- "3rd Generation Partnership Project; Technical Specification Group Radio Access Network; Study on optimizations of UE radio capability signalling; NR / Evolved Universal Terrestrial Radio Access Network (E- UTRAN) aspects (Release 16)", 3GPP STANDARD; TECHNICAL REPORT; 3GPP TR 37.873, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 16 April 2019 (2019-04-16), pages 1 - 18, XP051723499

## Description

### FIELD

Embodiments of the present disclosure generally relate to the field of telecommunication and in particular, to a method, device, apparatus and computer readable storage medium for exchanging capability information of a communication device.

### BACKGROUND

A communication system usually comprises many terminal devices with various capabilities. In order to enable the communication between a terminal device and a network device (such as, a base station, an eNodeB, and so on), the terminal device needs to report capability information to the network device and the communication system may maintain the capability information of the terminal device. With the development of communication technologies, the capabilities supported by the terminal device are increasing, which causes a big challenge for the procedure of exchanging the capability information, in particular when the terminal device needs to frequently switch between different the network devices. Therefore, there is a need for a solution to improve the procedure of exchanging the capability information. Document "3rd Generation Partnership Project; Technical Specification Group Radio Access Network; Study on optimizations of UE radio capability signalling; NR / Evolved Universal Terrestrial Radio Access Network (E- UTRAN) aspects (Release 16)",3GPP STANDARD; TECHNICAL REPORT; 3GPP TR 37.873, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 16 April 2019 (2019-04-16), pages 1-18, XP051723499 describes UE capability identity mechanisms for optimizing capability signalling in 5G networks.

### SUMMARY

In general, example embodiments of the present disclosure provide solutions for exchanging of capability information. A device, network device and terminal device are provided as claimed.

### BRIEF DESCRIPTION OF THE DRAWINGS

Some example embodiments will now be described with reference to the accompanying drawings, where:
Fig. 1 illustrates an example communication network in which embodiments of the present disclosure may be implemented;
Fig. 2 illustrates a signaling chart illustrating a process for exchanging capability information according to some example embodiments of the present disclosure;
Fig. 3 illustrates a flowchart of a method implemented at a device according to some example embodiments of the present disclosure;
Fig. 4 illustrates a flowchart of a method implemented at a network device according to some example embodiments of the present disclosure;
Fig. 5 illustrates a flowchart of a method implemented at a control device according to some example embodiments of the present disclosure;
Fig. 6 illustrates a flowchart of a method implemented at a terminal device according to some example embodiments of the present disclosure;
Fig. 7 illustrates a simplified block diagram of an apparatus that is suitable for implementing embodiments of the present disclosure; and
Fig. 8 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a wired or wireless network following any suitable communication standards, such as 5G, New Radio (NR), Long Tenn Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, enhanced user interface (NETBEUI), internetwork packet exchange/sequences packet exchange (IPX/SPX), transmission control protocol/internet protocol (TCP/IP), and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

The term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As used herein, the term "core network device" refers to any application or entity that provides Access and Mobility Management function, Session Management function (SMF), User plane function (UPF), etc. By way of example rather than limitation, the core network device may be an Availability Management Framework (Availability Management Framework), a SMF, a UPF, a Mobility Management Entity (MME) etc. In other embodiments, the core network device may be any other suitable application or entity. As used herein, the term "control device" refers to any application or entity that provides control function, which may include, but is not limited to, a core network device, such as an Access and Mobility Management function, a Session Management function (SMF), a User plane function (UPF), etc. By way of example rather than limitation, the core network device may be an Availability Management Framework (Availability Management Framework), a SMF, a UPF, a Mobility Management Entity (MME), etc. In other embodiments, the core network device may be any other suitable application or entity in a core network.

As used herein, the term "device" refers to any node in the communication system. By way of example rather than limitation, the device may refer to a terminal device, network device or a core network device as defined above.

In communication networks where a number of terminal devices support different communication capabilities, the terminal devices need to report their capabilities to the network devices. In an example scenario of 5G communication network, the size of the capability information for the terminal device is significantly growing as supporting the additional bands. Therefore, how to identify the capabilities of the terminal device and how to store and manage the capabilities is desirable to be settled.

Many works have been done to optimize the procedure of exchanging capability information. For example, the 3rd Generation Partnership Project (3GPP) has completed a study item (SI) on optimizing capability signaling between the terminal device and the network device. More specifically, the SI proposed that capabilities of the terminal device can be represented by limited capability identities.

In addition, when a handover (such as, Xn handover, S1 handover and so on) occurs, the radio capability of the terminal device needs to be transferred between a source network device/AMF and a target network device/AMF. However, there was no solution about how to handle a capability identity (ID) for the terminal device during the Xn or S1 handover. In particular, the source network device and the target network device may use different filters configured by the provider/operator in the communication system 100, which causes that the capability ID used by the source network device/AMF cannot be identified by the target network device/AMF. However, currently there is no solution about how to handle capability identity (ID) for the terminal device during the Xn or S1 handover. In particular, the source network device and the target network device may use different filters, which causes that the capability ID used by the source network device/AMF cannot be identified by the target network device/AMF. Therefore, in some cases, the target network device still needs to ask the terminal device to report its capability, even the source device network device transmits the capability ID currently in use to the target device during the handover. When the terminal device located at the overlapped coverage of two cells and the source network device and the target network device are associated with different frequency bands/filters, there will be extra and huge signaling load on the air interface.

In some cases, it is possible for the network to use different filters in different parts of an area (such as in a Public Land Mobile Network (PLMN)). If an ID of the terminal device is assigned by network, then the ID is associated to whatever capabilities the UE has transferred earlier. In context of PLMN assigned ID, the capability ID is unique within a PLMN.

In some implementations, the UE capability ID may be transferred from the source network device to the target network device when the S1 or X2 handover happened. As different filters may be used in the source network device and the target network device, the capability ID of the terminal device used in the source network device is unknown in the target network device, which means the target network device may not have the mapping of the ID to UE capability set. In this situation, the target network device shall ask the terminal device to report its capability via *UECapabilityInformation* in an air interface (a first option), or enquire (not sure which message will be used) to 5GC (5^{th} generation core network)/AMF to get back the capability set (a second option). For the second option, if the capability set got from 5GC/AMF is not suitable for the target network device (the mapping is got from the capability ID used in source network device), the target network device shall go to the first option again to establish one new mapping for new capability ID of the terminal device and new received capability set. The worst case is the frequent handover happened between two network devices with different filters, to and back, which will lead to extra and huge signalling load to the air interface and the interface to 5GC.

According to example embodiments of the present disclosure, there is provided solutions for exchanging capability information. In example some embodiments, when a source network device transmits capability information of a terminal device to a target network device during a handover, the source network device transmits not only the current capability information of the terminal device, but also capability information used previously by the terminal device. In this way, the target network device can obtain more capability information of the terminal device. Since the target network device triggers the terminal device to report capability information only in case that all the received capability information cannot be identified, unnecessary request and transmission of the capability information can be avoided. These solutions especially benefit the scenario where the handover occurs frequently between two network devices with different frequency bands or use different filters.

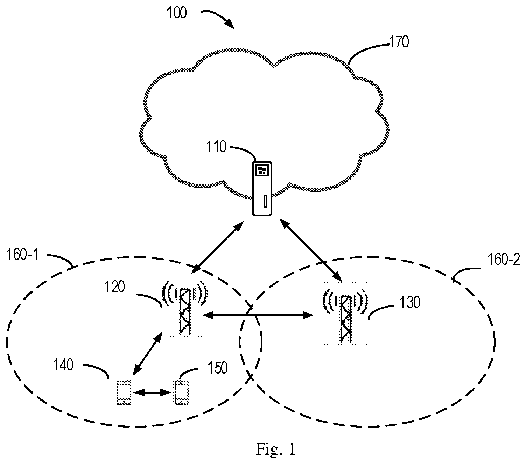

Principle and embodiments of the present disclosure will be described in detail below with reference to the accompanying drawings. Reference is first made to Fig. 1, which illustrates an example communication system 100 in which example embodiments of the present disclosure may be implemented. The system 100 includes a plurality of network devices, such as network devices 120 and 130. The network devices 120 and 130 serve respective areas 160-1 and 160-2 (also called as cells 160-1 and 160-2 and collectively referred to as cell (s) 160). The system 100 also includes one or more terminal devices, such as terminal devices 140 and 150, and a control device, e.g., a core network device 110. The network device 120 and the network device 130 can communicate with the core network device 110 in the network 170.

It is to be understood that the number of core network devices, network devices and terminal devices is only for the purpose of illustration without suggesting any limitations. The system 100 may include any suitable number of core network devices, network devices and terminal devices adapted for implementing embodiments of the present disclosure. Although not shown, it would be appreciated that one or more terminal devices may be located in the cells 160.

Communications in the communication system 100 may be implemented according to any proper communication protocol(s), comprising, but not limited to, cellular communication protocols of the first generation (1G), the second generation (2G), the third generation (3G), the fourth generation (4G), the fifth generation (5G) and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

It should be understood that although some example embodiments of the present disclosure have been described with reference to the communication system 100 illustrated in Fig. 1, embodiments of the present disclosure are not limited to be applied in this scenario, but may be more widely applied to any suitable communication network, system or scenario.

Taking the communication system 100 shown in Fig. 1 as an example, the radio capabilities of the terminal device 140 may be stored in the core network device 110 (e.g., a AMF or MME) when the terminal device 140 is in connection management-idle (CM-IDLE) status and the following principles may apply with respect to retrieving and storing of the radio capabilities of the terminal device 140:
- The core network device stores the radio capabilities of the terminal device that are forwarded by the network device via a N2 or S1 message.
- When the terminal device establishes a connection, the core network device that stores the last received capabilities of the terminal device sent the last received capabilities of the terminal device as part of the INITIAL CONTEXT SETUP REQUEST message to the network device.
- during handover preparation, the source network device transfers both the source RAT capabilities of the terminal device and the target RAT capabilities of the terminal device to the target RAN node, in order to minimize interruptions.
- radio capabilities of the terminal device are not transferred during inter-MME mobility and mobility from MME to AMF (and vice-versa).
- radio capabilities of the terminal device are transferred during inter-AMF mobility inside the fifth-generation core network.

Moreover, the capability ID is supported in the communication system 100. Taking the communication system 100 shown in Fig. 1 as an example, the network device 120 and/or the core network device 110 can allocate a capability ID for a capability set of the terminal device 140. After allocating the capability ID, the capability ID instead of the capabilities will be transmitted in the communication system 100. The device (such as, the network device 120 or the core network device 110) that knows the mapping between the capability ID and the capability set can determine the capability of the terminal device only through a capability ID. The capability ID of the terminal device 140 may be transmitted via a non-access stratum (NAS) signalling in the normative phase, and/or transmitted in a *UECapabilityInformation* message after AS security is activated.

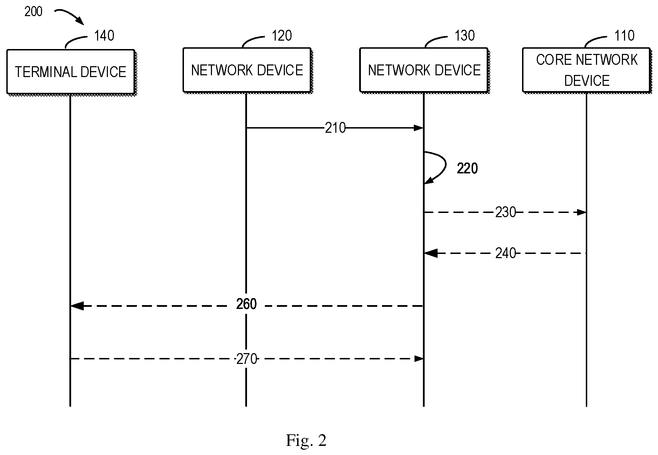

Reference is now made to Fig. 2, which illustrates a schematic signalling chart showing a process 200. Only for purpose of illustration, the process 200 involves the terminal device 140, the network device 120, the network device 130 and the core network device 110. In addition, only for purpose of illustrations, the process 200 will be described in the scenario of handover in a communication system. In this example scenario, the network device 120 may act as a source network device during the handover procedure, the network device 130 may act as a target network device, and the terminal device 140 may switch from the cell 160-1 to the cell 160-2.

Moreover, in this example embodiment, the terminal device 140, the network device 120, and the core network device 110 may each maintain a respective capability ID list for the terminal device 140 locally. The capability ID list comprises at least one entry. Each entry in the capability ID list at least indicates a capability ID that is previously allocated for the terminal device 140. In addition, each entry may further comprise validity information associated with the capability ID comprised in the entry. In some example embodiments, the validity information is related to or indicates an area in which the respective capability ID is valid. It should be noted that, in other embodiments, the validity information may be related to any suitable factors, such as, a time period, the operator/provider of the communication system, and so on. The procedure of maintaining the capability ID list will be discussed by referring to the process 200 as illustrated in Fig. 2.

In the process 200, the network device 120 obtains at least one capability ID of a terminal device which is used by the terminal device previously. In some example embodiments, the network device 120 obtains the at least one capability ID from a capability ID list stored locally, and each entry in the capability ID list at least indicates a capability ID allocated for the terminal device 140. In this example embodiment, the obtaining 210 may be triggered by a handover procedure of the terminal device 140. It should be noted that in some other example embodiments, the obtaining 210 may be triggered by a capability request, and so on. Then, the network device 120 generates based on the at least one capability ID. The generated capability information includes at least one capability ID used by the terminal device 140 previously. In some example embodiments, the capability information may also indicate an optional indication of the validity information associated with one or more of the at least one capability ID. In other words, the capability ID being comprised in the capability information was used by the terminal device 140 prior to a current capability ID. In some embodiments, the capability information also includes the current capability ID of the terminal device 140 used in communication with the source network device.

The network device 120 transmits 210 the generated capability information to the network device 130.

Alternatively, and in addition, the network device 120 may obtain the capability information or the at least one capability ID of the terminal device from one or more further devices. For example, the network device 120 may receive a message from the core network device 110, or the terminal device 140 in the commutation system 100. Such message may comprise the capability information or the at least one capability ID. The network device 120 may just forward this message to the network device 130.

The capability information enables the network device 130 to determine a proper capability of the terminal device for communication after the handover. For example, after receiving the capability information, the network device 130 processes 220 the capability information. More specifically, the network device 130 may detect the capability IDs from the capability information. The network device 130 determines the capability of the terminal device 140 based at least in part on the capability IDs included in the capability information.

If the network device 130 has already stored a capability ID list of the terminal device 140 locally, which may not be synchronized with the capability ID list stored locally at the source network device 120, the target network device 130 may update the local capability ID list based on the received capability IDs. The updated capability ID list may be transferred to another network device during next handover. If the network device 130 does not have a capability ID list of the terminal device 140 yet, then after it becomes the new serving network device of the terminal device 140 due to the handover, it creates a capability ID list of the terminal device 140 based on the received capability IDs.

In some example embodiments, the network device 130 may determine the capability of the terminal device 140 based on the capability IDs included in the capability information directly. For example, the network device 130 may recognize at least one of the capability IDs and the recognized capability IDs are suitable to be used. In such case, the network device 130 may use the recognized capability IDs directly. However, as the network device 130 and the network device 120 may operate on different frequency bands, and/or adopt different filters for the capability reported from the terminal device 140, the network device 130 may not know the mapping between the capability ID received from the source network device 120 and the capability set of the terminal device 140, which leads to a situation where the capability ID cannot be recognized by the network device 130.

In case that the network device 130 cannot recognize any of the capability IDs comprised in the received capability information, the network device 130 may determine to use a predefined default capability of the terminal device 140 or to trigger a procedure of obtaining the capabilities of the terminal device 140. In some example embodiments, the network device 130 may transmit 260 a request to the terminal device 140 to trigger the terminal device 140 to transmit 270 a report on its capabilities.

Alternatively, and in addition, the network device 130 may transmit 230 a request for capability information of the terminal device 140 to the core network device 110 to obtain further capability information of the terminal device 140. In some example embodiments, the network device 130 may enquire the core network device 110 to provide the capability set of the terminal device 140. In some example embodiments, the request for capability information may comprise the filter of the network device 130.

Alternatively, the request may indicate one or more capabilities of the terminal device 140 supportable by the network device 130, and request the core network device 110 to allocate a new capability ID for the indicated capability. The core network device 110 transmits 240 the capability information of the terminal device 140 to the network device 130 in response to the request. In addition, if the capability information comprises capability IDs, the network device 130 may also use the capability information to update the capability ID list stored locally at the network device 130.

In some example embodiments, even if the capability ID(s) can be recognized by the network device 130, the network device 130 may also want to trigger an allocation for a new capability ID. Each recognized ID corresponds to a capability set. For example, the network device 130 may recognize one or more capability IDs (such as ID1) comprised in the capability information, and can support partial capabilities associated with the recognized capability IDs. As another example, the network device 130 can recognize at least two capability IDs (for example ID2 and ID3), and can support a combination of capabilities associated with the capability IDs, ID2 and ID3. In such scenario, the network device 130 may trigger an allocation procedure for a new capability ID by sending a request to the core network device 110. The request may include a command for allocating a capability ID for the partial capability or the combination of capabilities supported by the target network device 130. It should be noted that in other examples, the request may also be transmitted to a further network device, such as the network device 120 or 130, which is capable of allocating a new capability ID for the terminal device 140.

In some example embodiments, the request for allocating a new capability ID indicates one or more capability IDs and/or a command for combining or splitting one or more capabilities associated with the one or more capability IDs, which means that the mapping between the new capability ID and the capabilities of the terminal device 140 is determined by the network device 130. In some example embodiments, the request for allocating a new capability ID may indicate at least one capability ID and the filter of the network device 130. The core network device 110 may allocate a new capability ID and determine the mapping between the new capability ID and the capabilities according to the filter of the network device 130.

After obtaining the new capability ID, the network device 130 may associate the new capability ID with the partial capability or the combination of capabilities as indicated in the request. The network device 130 may communicate with the terminal device 140 based on the capability associated with the new capability ID.

In some example embodiments, after obtaining the new capability ID, the network device 130 may update a capability ID list of the terminal device 140 maintained at the target network device 130, and may inform the terminal device 140 of the new capability ID.

In conclusion, when needed, capability information comprising at least one capability identity of a terminal device used by the terminal device previously may be exchanged. In this way, the network device 130 may obtain more information about capability IDs allocated to the terminal device 140, e.g., during the handover. Therefore, unnecessary request/transmission of the full capability information (e.g., capability set or *UECapabilityInformation*) from/to the network device 130 can be avoided or reduced.

It should also be noted that in case that an intra-AMF handover happens, the capability information comprising at least one previous capability identity of a terminal device may also be transmitted via the core network device 110. In such scenario, the source network device 120 may transmit the capability information to the core network device 110. The core network device 110 then forwards the capability information to the target network device 130. The target network device 130 may utilize the received capability information, e.g., previous capability IDs of the terminal device 140, to determine a proper capability of the terminal device 140 to be used for communicating with the terminal device 140 after the handover. During this procedure, both of the core network device 110 and the target network device 130 may update their capability ID list based on the received capability information.

In some example embodiments, the capability information, e.g., from the source network device 120 to the target network device 130, may be transmitted in an information element (IE) of UE History Information, more specifically, through parameters as illustrated in Table 1.

**Table 1 Definition of the IE**

| **IE/Group Name** | **Semantics Description** |
|---|---|
| Last Visited Cell List | Most recent information is added to the top of this list |
| >Last Visited Cell Information | |
| Last used UE capability ID List | Most recent information is added to the top of this list |
| > Last used UE capability ID | The UE capability ID |
| > Validity of ID | A zone in which the UE Capability ID was allocated by the network |
| maxnoofCellsin UEHistory Info | Maximum number of last visited cell information records that can be reported in the IE. Value is 16. |

However, it should be appreciated that the IEs for such capability information indication are just provided for illustration purpose, and embodiments of the present disclosure are not limited to any specific format of the indication.

As described in the example embodiments above, a network device, such as the network device 130, may need to determine the capability of the terminal device 140 in various scenarios such as when the network device 130 is a target network device to which the terminal device 140 is handed over. As discussed, the capability of the terminal device 140 may be provided from various devices such as the network device 120 which is currently serving the terminal device 140, the terminal device 140 itself, and/or the core network device 110. In some cases, the network device 130 may even be allowed to request the core network device 110 to allocate a new capability identity for the terminal device 140. To better understand the exchange of capability information between the devices in the communication system, the operations performed at each of the devices will be described below from the perspective of the device itself.

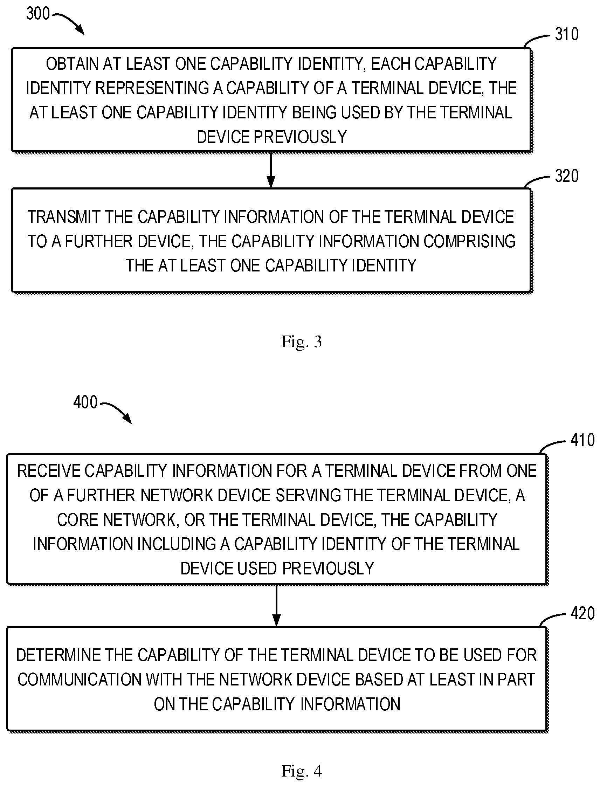

Fig. 3 shows a flowchart of an example method 300 implemented at a device in accordance with some example embodiments of the present disclosure. The method 300 is related to a process where a network device or a core network device, which acts as a sender, transmits at least one capability identity used by a terminal device previously to a further device, such as any other network device that expects to communicate with the terminal device. For the purpose of discussion, the method 300 will be described from the perspective of the network device 120 or the core network device 110 with reference to Fig. 1.

At block 310, the network device 120 or the core network device 110 obtains at least one capability identity used by the terminal device 140 previously. Each capability identity represents a capability of the terminal device 140.

In some example embodiments, the network device 120 or the core network device 110 may maintain a capability identity list locally which comprises one or more entries each indicating a capability identity allocated for the terminal device 140. The network device 120 or the core network device 110 may obtain the at least one capability identity from the capability identity list maintained locally.

The locally maintained capability identity list may be updated as one or more capability identities are allocated to the terminal device 140. In some example embodiments, the network device 120 or the core network device 110 may update the capability identity list in response to a further capability identity being allocated to the terminal device 140. As such, the capability identity list may reflect the latest update of the terminal device 140.

At block 320, the network device 120 or the core network device 110 transmits capability information of the terminal device to a further device. The transmitted capability information comprised the at least one capability identity obtained by the device. The further device, which acts as the receiver of the capability information, may be any network device that expects to establish communication with the terminal device 140. The capability information may facilitate its communication with the terminal device 140.

An example embodiment of exchanging the capability information is related to a handover procedure where the terminal device 140 will switch from the currently serving network device 120 to a target network device 130. In this case, the network device 120 may transmit the capability information to the target network device 130 during the handover procedure. Such capability information may be used to facilitate the network device 130 to determine a proper capability of the terminal device 140 for their communication. Alternatively, or in addition, the core network device 110 may also transmit the capability information to the target network device 130 during the handover procedure.

It would be appreciated that although the handover procedure is provided as an example scenario where the capability information is to be transmitted, the network device 120 or the core network device 110 may transmit the capability information in many other communication scenarios or in response to an explicit trigger from the further network device (such as the network device 130). In some other embodiments, the network device 120 or the core network device 110 may even transmit the capability information of the terminal device 140 to a further core network device or even a further terminal device. The scope of the present disclosure is not limited in this regard.

In some example embodiments, in addition to one or more capability identities to be provided, the network device 120 or the core network device 110 may provide the further device with validity information associated with at least one of the one or more capability identities. The validity information may be related to or indicate an area in which the respective capability identity is valid. Both the capability identity (identities) and the validity information may be comprised in the capability information transmitted to the further device.

In some example embodiments, the core network device 110 may be able to allocate a new capability identity to the terminal device 140 in response to a request. More specifically, the core network device 110 may receive, from a network device (such as the network device 120 or 130), a request to allocate a new capability identity to the terminal device 140. The request may indicate one or more capability identities and/or a command for combining or splitting one or more capabilities associated with the one or more capability identities. In response to such request, the core network device 110 may allocate a new capability identity to the terminal device 140 based on at least part of the one or more capabilities and transmit the new capability identity to the network device which requests the allocation of the new capability identity. The new capability identity may be transmitted to the network device in any suitable message/signaling.

The sending of the capability information has been described in the example embodiments described with reference to Fig. 3. Reference is now made to Fig. 4, which shows a flowchart of an example method 400 implemented at a network device in accordance with some example embodiments of the present disclosure. The method 400 is related to a process where a network device, which acts as a receiver, receives capability information of a terminal device from a further device. For the purpose of discussion, the method 400 will be described from the perspective of the network device 130 with reference to Fig. 1.

At block 410, the network device 130 receives capability information for the terminal device 140 from one of a further network device serving the terminal device 140 (such as the network device 120), a core network device (such as the core network device 110), or the terminal device 140. As mentioned above, the capability information includes a capability identity of the terminal device which is used previously. In some example embodiments, the capability identity may be a capability identity used prior to the terminal device being served by the further network device. In some embodiments, the capability information may also include a capability identity of the terminal device currently in use in communication with the further network device. As mentioned above, the capability information may be received in a handover procedure in which the network device 130 is the target network device, which can facilitate the communication between the network device 130 and the terminal device 140.

At block 420, the network device 130 determines the capability of the terminal device 140 to be used for communication with the network device 130 based at least in part on the capability information.

In some example embodiments, when determining the capability of the terminal device 140, the network device 130 may extract the capability identity from the capability information and determine the capability of the terminal device 140 based at least in part on the capability identity. For example, if the network device 130 can recognize and support a capability ID (which may be the current capability ID or a previous capability ID of the terminal device) included in the capability information from the source network device, it can determine a capability of the terminal device for following communication based on the recognized capability ID directly. In such a case, there is no need for the network device 130 to request a capability report from the terminal device 140 or request a capability of the terminal device 140 from a core network device 110.

In some example embodiments, the network device 130 may maintain locally a capability identity list for the terminal device 140, with each entry at least indicating a capability identity that is allocated for the terminal device. Upon receiving the capability information, the network device 130 may update the capability identity list based on the received capability information.

In some example embodiments, in addition to the capability identity, the received capability information may further comprise validity information for the capability identity. In this case, the network device 130 may check whether the capability identity is valid based on the validity information. In response to the capability identity being valid, the network device 130 determines a capability associated with the capability identity as the capability of the terminal device 140 to be used for communication with the network device 130. By means of validation, it is possible to avoid the impact of error and invalid capability information on the following communication. In some example embodiments, the validity information may indicate an area in which the respective capability identity is valid. As such, the capability identity can be limited to be used in certain valid area.

In some example embodiments, the network device 130 may request the core network device 110 to allocate a new capability identity for the terminal device 140 and may probably indicate how the new capability identity can be allocated. More specifically, the network device 130 may transmit, to the core network device 110, a request for the control device to allocate a new capability identity to the terminal device 140. The request may indicate one or more capability identities and/or a command for combining or splitting one or more capabilities associated with the one or more capability identities. After the core network device 110 completes the allocation, the network device 130 may receive a new capability identity from the core network device 110 and determine the capability of the terminal device 140 to be used for communication with the network device 130 based on the new capability identity. The new capability identity may also be used by the network device 130 to update the capability identity list maintained locally.

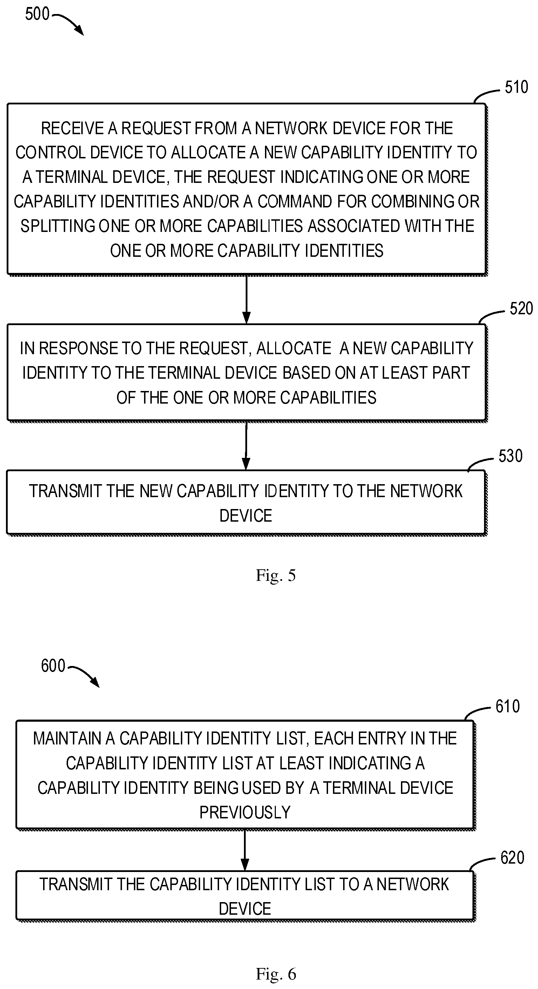

In the example embodiments described, a core network device, such as the core network device 110 in Fig. 1, can allocate a new capability identity to a terminal device in response to a request, especially in the scenario of the handover procedure. In other example embodiments, a network device, such as the network device 120 or the network device 130 may also be capable of allocating the new capability identity to a terminal device. To better illustrate these example embodiments, Fig. 5 shows a flowchart of an example method 500 implemented in such embodiments. The method 500 may be implemented at a control device, which may be a core network device or a network device. For the purpose of discussion, the method 500 will be described from the perspective of the core network device 110 or network devices 120 and 130 with reference to Fig. 1.

At block 510, the core network device 110 or the network device 120 or 130 receives, from a network device (such as the network device 120 or the network device 130), a request to allocate a new capability identity to the terminal device 140. As mentioned, the request may indicate one or more capability identities and/or a command for combining or splitting one or more capabilities associated with the one or more capability identities. At block 520, in response to the request, the core network device 110 or the network device 120 or 130 allocates a new capability identity to the terminal device based on at least part of the one or more capabilities. At block 530, the core network device 110 or the network device 120 or 130 transmits the new capability identity to the network device.

In the example embodiments described with reference to Fig. 3, a network device or a core network device is the sender of the capability information of a terminal device. In some other example embodiments, the terminal device may send its own capability information to a further device which expects to communicate with the terminal device 140. Fig. 6 shows a flowchart of an example method 600 in such example embodiments. The method 600 may be implemented at a terminal device. For the purpose of discussion, the method 600 will be described from the perspective of the terminal device 140 with reference to Fig. 1.

At block 610, the terminal device 140 maintains a capability identity list, each entry in the capability identity list at least indicating a capability identity being used by the terminal device previously. In some example embodiments, in response to receiving a new capability identity allocated for the terminal device from a further network device, the terminal device 140 may update the capability identity list based on the received new capability identity. As such, the capability identity list may reflect the latest update of the terminal device 140.

At block 620, the terminal device 140 transmits the capability identity list to a network device, such as the network device 120 or 130. In some example embodiments, the terminal device 140 may transmit the capability identity list to the network device 120 or 130 in response to at least one of: receiving a request for reporting capability of the terminal device 140 from the network device 120 or 130, and establishment of a new connection with the network device 120 or 130.

In some example embodiments, an apparatus capable of performing any of the method 300 (for example, the network device 120 or the core network device 110) may comprise means for performing the respective steps of the method 300. The means may be implemented in any suitable form. For example, the means may be implemented in a circuitry or software module.

In some example embodiments, the apparatus further comprises means for obtaining, at a device, at least one capability identity, each capability identity representing a capability of a terminal device, the at least one capability identity being used by the terminal device previously; and means for transmit the capability information of the terminal device to a further device, the capability information comprising the at least one capability identity.

In some example embodiments, the apparatus further comprises means for obtaining validity information associated with a capability identity of the at least one capability identity; and means for transmitting the capability information comprising the validity information to the further device.

In some example embodiments, the validity information indicates an area in which the respective capability identity is valid.

In some example embodiments, the apparatus further comprises means for updating the capability identity list maintained by the device in response to a further capability identity being allocated to the terminal device.

In some example embodiments, the means for transmitting the capability information comprises means for transmitting the capability information during a handover procedure of the terminal device. The device is a source network device for the handover procedure, and the further device is a target network device for the handover procedure.

In some example embodiments, the device is a control device (e.g., a core network device), and the apparatus further comprises: means for receiving, from a network device, a request for the control device to allocate a new capability identity to the terminal device, the request indicating one or more capability identities and/or a command for combining or splitting one or more capabilities associated with the one or more capability identities; means for in response to the request, allocating a new capability identity to the terminal device based on at least part of the one or more capabilities; and transmitting the new capability identity to the network device.

In some example embodiments, an apparatus capable of performing any of the method 400 (for example, the network device 130) may comprise means for performing the respective steps of the method 400. The means may be implemented in any suitable form. For example, the means may be implemented in a circuitry or software module.

In some example embodiments, the apparatus comprises means for receiving, at a network device, capability information for a terminal device from one of a further network device serving the terminal device, a core network, or the terminal device, the capability information including a capability identity of the terminal device used previously; and means for determining the capability of the terminal device to be used for communication with the network device based at least in part on the capability information .

In some example embodiments, the capability identity is used prior to the terminal device being served by the further network device.

In some example embodiments, the apparatus further comprises means for updating a capability identity list maintained by the network device based on the received capability information, each entry in the capability identity list at least indicating a capability identity allocated for the terminal device.

In some example embodiments, the apparatus further comprises means for transmitting, to a control device, a request for the control device to allocate a new capability identity to the terminal device, the request indicating one or more capability identities and/or a command for combining or splitting one or more capabilities associated with the one or more capability identities; receiving a new capability identity from the control device; and determining the capability of the terminal device to be used for communication with the network device based on the new capability identity.

In some example embodiments, the apparatus further comprises means for updating a capability identity list maintained by the network device in response to a new capability identity being allocated to the terminal device.

In some example embodiments, the capability information further comprises validity information for the capability identity. In some example embodiments, the apparatus comprises means for checking whether the capability identity is valid based on the validity information; and means for in response to the capability identity being valid, determining a capability associated with the capability identity as the capability of the terminal device to be used for communication with the network device.

In some example embodiments, the validity information indicates an area in which the respective capability identity is valid.

In some example embodiments, the means for receiving capability information comprises means for receiving the capability information during a handover procedure of the terminal device. The network device is a target network device for the handover procedure, and the further network device is a source network device for the handover procedure.

In some example embodiments, an apparatus capable of performing any of the method 500 (for example, the core network device 110, the network device 120, or the network device 130) may comprise means for performing the respective steps of the method 500. The means may be implemented in any suitable form. For example, the means may be implemented in a circuitry or software module.

In some example embodiments, the apparatus comprises means for receiving, at a control device, a request from a network device for the control device to allocate a new capability identity to the terminal device, the request indicating one or more capability identities and/or a command for combining or splitting one or more capabilities associated with the one or more capability identities; means for in response to the request, allocating a new capability identity to the terminal device based on at least part of the one or more capabilities; and means for transmitting the new capability identity to the network device.

In some example embodiments, an apparatus capable of performing any of the method 600 (for example, the terminal device 140) may comprise means for performing the respective steps of the method 600. The means may be implemented in any suitable form. For example, the means may be implemented in a circuitry or software module.

In some example embodiments, the apparatus comprises means for maintaining, at a terminal device, a capability identity list, each entry in the capability identity list at least indicating a capability identity being used by the terminal device previously and means for transmitting the capability identity list to a network device.

In some example embodiments, the apparatus further comprises means for in response to receiving a new capability identity allocated for the terminal device from a further network device, updating the capability identity list based on the received new capability identity.

In some example embodiments, the apparatus further comprises means for transmitting the capability identity list to the network device in response to at least one of: receiving a request for reporting capability of the terminal device, and establishment of a new connection with the network device.

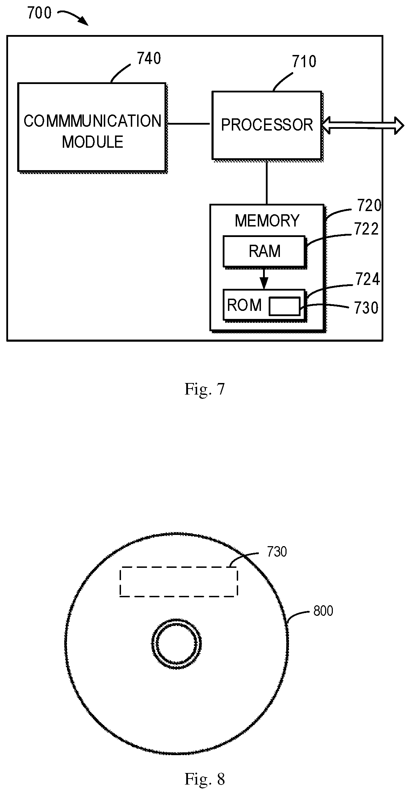

Fig. 7 is a simplified block diagram of a device 700 that is suitable for implementing embodiments of the present disclosure. The device 700 may be provided to implement the communication device, for example the terminal device 140, the network devices 120 or 130, or the core network device 110 as shown in Fig. 1. As shown, the device 700 includes one or more processors 710, one or more memories 720 coupled to the processor 710, and one or more communication modules 740 coupled to the processor 710.

The communication module 740 is for bidirectional communications. The communication module 740 has at least one antenna to facilitate communication. The communication interface may represent any interface that is necessary for communication with other network elements.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random-access memory (RAM) 722 and other volatile memories that will not last in the power-down duration.

A computer program 730 includes computer executable instructions that are executed by the associated processor 710. The program 730 may be stored in the ROM 722. The processor 710 may perform any suitable actions and processing by loading the program 730 into the RAM 722.

The embodiments of the present disclosure may be implemented by means of the program 730 so that the device 700 may perform any process of the disclosure as discussed with reference to Figs. 2 to 6. The embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. The computer readable medium may include any types of tangible non-volatile storage, such as ROM, EPROM, a flash memory, a hard disk, CD, DVD, and the like. Fig. 8 shows an example of the computer readable medium 800 in form of CD or DVD. The computer readable medium has the program 730 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 300, 400, 500 and 600 as described above with reference to Figs. 3-6. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A device (110, 120, 140), comprising means for:
obtaining (310) at least one capability identity used by a terminal device (140) prior to a current capability identity used by the terminal device, each of the at least one capability identity representing a capability of the terminal device (140); and
transmitting (320) capability information of the terminal device (140) to a further device (130), the capability information comprising the at least one capability identity.

2. The device (110, 120, 140) of claim 1, wherein the means are further configured to perform:
obtaining validity information associated with a capability identity of the at least one capability identity; and
transmitting the capability information comprising the validity information to the further device.

3. The device (110, 120, 140) of claim 2, wherein the validity information indicates an area in which the respective capability identity is valid.

4. The device (110, 120, 140) of any of claims 1 to 3, wherein the means are further configured to perform:
obtaining the at least one capability identity from a capability identity list maintained by the device, each entry in the capability identity list at least indicating a capability identity allocated for the terminal device.

5. The device (120) of any of claims 1 to 4, wherein the means are further configured to perform:
transmitting the capability information during a handover procedure of the terminal device (140), and
wherein the device (120) is a source network device for the handover procedure, and the further device (130) is a target network device for the handover procedure.

6. The device (110, 120) of any of claims 1 to 4, wherein the device is a control device, and wherein the means are further configured to perform:
receiving (510), from a network device (130), a request for the device to allocate a new capability identity to the terminal device (140), the request indicating at least one of:
one or more capability identities, or
a command for combining or splitting one or more capabilities associated with the one or more capability identities;
in response to the request, allocating (520) a new capability identity to the terminal device (140) based on at least part of the one or more capability identities; and
transmitting (530) the new capability identity to the network device (130).

7. The device (110, 120, 140) of any of claims 1 to 6, wherein the means comprises
at least one processor; and
at least one memory including computer program codes, the at least one memory and computer program codes configured to, with the at least one processor, cause the performance of the steps of any of claims 1 to 6.

8. A network device (130), comprising means for:
receiving (410) capability information for a terminal device (140) from one of a further network device (120) serving the terminal device (140), a core network (110), or the terminal device (140), the capability information including a capability identity of the terminal device (140) used prior to a current capability identity used by the terminal device, the capability identity representing a capability of the terminal device; and
determining (420) the capability of the terminal device (140) to be used for communication with the network device (130) based at least in part on the capability information.

9. The network device (130) of claim 8, wherein the capability identity is used prior to the terminal device being served by the further network device (120).

10. The network device (130) of claim 8, wherein the means are further configured to perform:
transmitting, to a control device (110, 120), a request for the control device (110, 120) to allocate a new capability identity to the terminal device (140), the request indicating at least one of:
one or more capability identities, or
a command for combining or splitting one or more capabilities associated with the one or more capability identities;
receiving a new capability identity from the control device (110, 120); and
determining the capability of the terminal device (140) to be used for communication with the network device (130) based on the new capability identity.

11. The network device (130) of claim 8, wherein the capability information further comprises validity information for the capability identity, and the means are further configured to perform:
checking whether the capability identity is valid based on the validity information; and
in response to the capability identity being valid, determining a capability associated with the capability identity as the capability of the terminal device (140) to be used for communication with the network device (130).

12. The network device (130) of claim 11, wherein the validity information indicates an area in which the respective capability identity is valid.

13. The network device (130) of any of claims 8 to 12, wherein the means are further configured to receive (410) the capability information during a handover procedure of the terminal device, and
wherein the network device (130) is a target network device for the handover procedure, and the further network device (120) is a source network device for the handover procedure.

14. A terminal device (140), comprising means for:
maintaining (610) a capability identity list, each entry in the capability identity list at least indicating a capability identity used by the terminal device (140) prior to a current capability identity used by the terminal device, the capability identity representing a capability of the terminal device; and
transmitting (620) the capability identity list to a network device (120, 130).

15. The terminal device (140) of claim 14, wherein the means are further configured to perform:
transmitting the capability identity list to the network device (120, 130) in response to at least one of:
receiving a request for reporting capability of the terminal device, or
establishment of a new connection with the network device (120, 130).

## Patentansprüche

1. Vorrichtung (110, 120, 140), umfassend Mittel zum:
Erhalten (310) mindestens einer Fähigkeitsidentität, die von einer Endgerätevorrichtung (140) vor einer aktuellen Fähigkeitsidentität, die von der Endgerätevorrichtung verwendet wird, verwendet wird, wobei jede der mindestens einen Fähigkeitsidentität eine Fähigkeit der Endgerätevorrichtung (140) repräsentiert; und
Übertragen (320) von Fähigkeitsinformationen der Endgerätevorrichtung (140) an eine weitere Vorrichtung (130), wobei die Fähigkeitsinformationen die mindestens eine Fähigkeitsidentität umfassen.

2. Vorrichtung (110, 120, 140) nach Anspruch 1, wobei die Mittel ferner konfiguriert sind zum Durchführen von:
Erhalten von Gültigkeitsinformationen, die mit einer Fähigkeitsidentität der mindestens einen Fähigkeitsidentität assoziiert sind; und
Übertragen der Fähigkeitsinformationen, die die Gültigkeitsinformationen umfassen, an die weitere Vorrichtung.

3. Vorrichtung (110, 120, 140) nach Anspruch 2, wobei die Gültigkeitsinformationen einen Bereich angeben, in dem die jeweilige Fähigkeitsidentität gültig ist.

4. Vorrichtung (110, 120, 140) nach einem der Ansprüche 1 bis 3, wobei die Mittel ferner konfiguriert sind zum Durchführen von:
Erhalten der mindestens einen Fähigkeitsidentität aus einer Fähigkeitsidentitätsliste, die von der Vorrichtung gepflegt wird, wobei jeder Eintrag in der Fähigkeitsidentitätsliste mindestens eine Fähigkeitsidentität angibt, die für die Endgerätevorrichtung zugewiesen ist.

5. Vorrichtung (120) nach einem der Ansprüche 1 bis 4, wobei die Mittel ferner konfiguriert sind zum Durchführen von:
Übertragen der Fähigkeitsinformationen während eines Übergabeverfahrens der Endgerätevorrichtung (140), und
wobei die Vorrichtung (120) eine Quellnetzwerkvorrichtung für das Übergabeverfahren ist, und die weitere Vorrichtung (130) eine Zielnetzwerkvorrichtung für das Übergabeverfahren ist.

6. Vorrichtung (110, 120) nach einem der Ansprüche 1 bis 4, wobei die Vorrichtung eine Steuerungsvorrichtung ist, und wobei die Mittel ferner konfiguriert sind zum Durchführen von:
Empfangen (510), von einer Netzwerkvorrichtung (130), einer Anforderung für die Vorrichtung, eine neue Fähigkeitsidentität der Endgerätevorrichtung (140) zuzuweisen, wobei die Anforderung mindestens eines von Folgendem angibt:
eine oder mehrere Fähigkeitsidentitäten, oder
einen Befehl zum Kombinieren oder Aufteilen einer oder mehrerer Fähigkeiten, die mit der einen oder den mehreren Fähigkeitsidentitäten assoziiert sind;
in Reaktion auf die Anforderung, Zuweisen (520) einer neuen Fähigkeitsidentität an die Endgerätevorrichtung (140) basierend auf mindestens einem Teil der einen oder mehreren Fähigkeitsidentitäten; und
Übertragen (530) der neuen Fähigkeitsidentität an die Netzwerkvorrichtung (130).

7. Vorrichtung (110, 120, 140) nach einem der Ansprüche 1 bis 6, wobei die Mittel umfassen:
mindestens einen Prozessor; und
mindestens einen Speicher, der Computerprogrammcodes enthält, wobei der mindestens eine Speicher und die Computerprogrammcodes konfiguriert sind, um mit dem mindestens einen Prozessor die Durchführung der Schritte eines der Ansprüche 1 bis 6 zu bewirken.

8. Netzwerkvorrichtung (130), umfassend Mittel zum:
Empfangen (410) von Fähigkeitsinformationen für eine Endgerätevorrichtung (140) von einer von einer weiteren Netzwerkvorrichtung (120), die die Endgerätevorrichtung (140) bedient, einem Kernnetzwerk (110) oder der Endgerätevorrichtung (140), wobei die Fähigkeitsinformationen eine Fähigkeitsidentität der Endgerätevorrichtung (140) umfassen, die vor einer aktuellen Fähigkeitsidentität, die von der Endgerätevorrichtung verwendet wird, verwendet wurde, wobei die Fähigkeitsidentität eine Fähigkeit der Endgerätevorrichtung repräsentiert; und
Bestimmen (420) der Fähigkeit der Endgerätevorrichtung (140), die für die Kommunikation mit der Netzwerkvorrichtung (130) zu verwenden ist, basierend zumindest teilweise auf den Fähigkeitsinformationen.

9. Netzwerkvorrichtung (130) nach Anspruch 8, wobei die Fähigkeitsidentität verwendet wird, bevor die Endgerätevorrichtung von der weiteren Netzwerkvorrichtung (120) bedient wird.

10. Netzwerkvorrichtung (130) nach Anspruch 8, wobei die Mittel ferner konfiguriert sind zum Durchführen von:
Übertragen, an eine Steuerungsvorrichtung (110, 120), einer Anforderung für die Steuerungsvorrichtung (110, 120), eine neue Fähigkeitsidentität der Endgerätevorrichtung (140) zuzuweisen, wobei die Anforderung mindestens eines von Folgendem angibt:
eine oder mehrere Fähigkeitsidentitäten, oder
einen Befehl zum Kombinieren oder Aufteilen einer oder mehrerer Fähigkeiten, die mit der einen oder den mehreren Fähigkeitsidentitäten assoziiert sind;
Empfangen einer neuen Fähigkeitsidentität von der Steuerungsvorrichtung (110, 120); und
Bestimmen der Fähigkeit der Endgerätevorrichtung (140), die für die Kommunikation mit der Netzwerkvorrichtung (130) zu verwenden ist, basierend auf der neuen Fähigkeitsidentität.

11. Netzwerkvorrichtung (130) nach Anspruch 8, wobei die Fähigkeitsinformationen ferner Gültigkeitsinformationen für die Fähigkeitsidentität umfassen, und die Mittel ferner konfiguriert sind zum Durchführen von:
Prüfen, ob die Fähigkeitsidentität basierend auf den Gültigkeitsinformationen gültig ist; und
in Reaktion darauf, dass die Fähigkeitsidentität gültig ist, Bestimmen einer mit der Fähigkeitsidentität assoziierten Fähigkeit als die Fähigkeit der Endgerätevorrichtung (140), die für die Kommunikation mit der Netzwerkvorrichtung (130) zu verwenden ist.

12. Netzwerkvorrichtung (130) nach Anspruch 11, wobei die Gültigkeitsinformationen einen Bereich angeben, in dem die jeweilige Fähigkeitsidentität gültig ist.

13. Netzwerkvorrichtung (130) nach einem der Ansprüche 8 bis 12, wobei die Mittel ferner konfiguriert sind, die Fähigkeitsinformationen während eines Übergabeverfahrens der Endgerätevorrichtung zu empfangen (410), und
wobei die Netzwerkvorrichtung (130) eine Zielnetzwerkvorrichtung für das Übergabeverfahren ist, und die weitere Netzwerkvorrichtung (120) eine Quellnetzwerkvorrichtung für das Übergabeverfahren ist.

14. Endgerätevorrichtung (140), umfassend Mittel zum:
Pflegen (610) einer Fähigkeitsidentitätsliste, wobei jeder Eintrag in der Fähigkeitsidentitätsliste mindestens eine Fähigkeitsidentität angibt, die von der Endgerätevorrichtung (140) vor einer aktuellen Fähigkeitsidentität, die von der Endgerätevorrichtung verwendet wird, verwendet wird, wobei die Fähigkeitsidentität eine Fähigkeit der Endgerätevorrichtung repräsentiert; und
Übertragen (620) der Fähigkeitsidentitätsliste an eine Netzwerkvorrichtung (120, 130).

15. Endgerätevorrichtung (140) nach Anspruch 14, wobei die Mittel ferner konfiguriert sind zum Durchführen von:
Übertragen der Fähigkeitsidentitätsliste an die Netzwerkvorrichtung (120, 130) in Reaktion auf mindestens eines von:
Empfangen einer Anforderung zur Meldung der Fähigkeit der Endgerätevorrichtung, oder
Aufbau einer neuen Verbindung mit der Netzwerkvorrichtung (120, 130).

## Revendications

1. Dispositif (110, 120, 140), comprenant des moyens pour :
obtenir (310) au moins une identité de capacité utilisée par un dispositif terminal (140) antérieurement à une identité de capacité actuelle utilisée par le dispositif terminal, chacune de l'au moins une identité de capacité représentant une capacité du dispositif terminal (140) ; et
transmettre (320) des informations de capacité du dispositif terminal (140) à un dispositif supplémentaire (130), les informations de capacité comprenant l'au moins une identité de capacité.

2. Dispositif (110, 120, 140) selon la revendication 1, dans lequel les moyens sont en outre configurés pour effectuer :
l'obtention d'informations de validité associées à une identité de capacité de l'au moins une identité de capacité ; et
la transmission des informations de capacité comprenant les informations de validité au dispositif supplémentaire.

3. Dispositif (110, 120, 140) selon la revendication 2, dans lequel les informations de validité indiquent une zone dans laquelle l'identité de capacité respective est valide.

4. Dispositif (110, 120, 140) selon l'une quelconque des revendications 1 à 3, dans lequel les moyens sont en outre configurés pour effectuer :
l'obtention de l'au moins une identité de capacité à partir d'une liste d'identités de capacité maintenue par le dispositif, chaque entrée dans la liste d'identités de capacité indiquant au moins une identité de capacité allouée pour le dispositif terminal.

5. Dispositif (120) selon l'une quelconque des revendications 1 à 4, dans lequel les moyens sont en outre configurés pour effectuer :
la transmission des informations de capacité pendant une procédure de transfert intercellulaire du dispositif terminal (140), et
dans lequel le dispositif (120) est un dispositif de réseau source pour la procédure de transfert intercellulaire, et le dispositif supplémentaire (130) est un dispositif de réseau cible pour la procédure de transfert intercellulaire.

6. Dispositif (110, 120) selon l'une quelconque des revendications 1 à 4, dans lequel le dispositif est un dispositif de commande, et dans lequel les moyens sont en outre configurés pour effectuer :
la réception (510), en provenance d'un dispositif de réseau (130), d'une requête pour que le dispositif alloue une nouvelle identité de capacité au dispositif terminal (140), la requête indiquant au moins l'un parmi :
une ou plusieurs identités de capacité, ou
une commande pour combiner ou diviser une ou plusieurs capacités associées aux une ou plusieurs identités de capacité ;
en réponse à la requête, l'allocation (520) d'une nouvelle identité de capacité au dispositif terminal (140) sur la base d'au moins une partie des une ou plusieurs identités de capacité ; et
la transmission (530) de la nouvelle identité de capacité au dispositif de réseau (130).

7. Dispositif (110, 120, 140) selon l'une quelconque des revendications 1 à 6, dans lequel les moyens comprennent :
au moins un processeur ; et
au moins une mémoire comprenant des codes de programme informatique, l'au moins une mémoire et les codes de programme informatique étant configurés pour, avec l'au moins un processeur, provoquer l'exécution des étapes de l'une quelconque des revendications 1 à 6.

8. Dispositif de réseau (130), comprenant des moyens pour :
recevoir (410) des informations de capacité pour un dispositif terminal (140) en provenance de l'un parmi un dispositif de réseau supplémentaire (120) desservant le dispositif terminal (140), un réseau cœur (110), ou le dispositif terminal (140), les informations de capacité comprenant une identité de capacité du dispositif terminal (140) utilisée antérieurement à une identité de capacité actuelle utilisée par le dispositif terminal, l'identité de capacité représentant une capacité du dispositif terminal ; et
déterminer (420) la capacité du dispositif terminal (140) à utiliser pour la communication avec le dispositif de réseau (130) sur la base au moins en partie des informations de capacité.

9. Dispositif de réseau (130) selon la revendication 8, dans lequel l'identité de capacité est utilisée antérieurement à ce que le dispositif terminal soit desservi par le dispositif de réseau supplémentaire (120).

10. Dispositif de réseau (130) selon la revendication 8, dans lequel les moyens sont en outre configurés pour effectuer :
la transmission, à un dispositif de commande (110, 120), d'une requête pour que le dispositif de commande (110, 120) alloue une nouvelle identité de capacité au dispositif terminal (140), la requête indiquant au moins l'un parmi :
une ou plusieurs identités de capacité, ou
une commande pour combiner ou diviser une ou plusieurs capacités associées aux une ou plusieurs identités de capacité ;
la réception d'une nouvelle identité de capacité en provenance du dispositif de commande (110, 120) ; et
la détermination de la capacité du dispositif terminal (140) à utiliser pour la communication avec le dispositif de réseau (130) sur la base de la nouvelle identité de capacité.

11. Dispositif de réseau (130) selon la revendication 8, dans lequel les informations de capacité comprennent en outre des informations de validité pour l'identité de capacité, et les moyens sont en outre configurés pour effectuer :
la vérification de si l'identité de capacité est valide sur la base des informations de validité ; et
en réponse au fait que l'identité de capacité est valide, la détermination d'une capacité associée à l'identité de capacité en tant que capacité du dispositif terminal (140) à utiliser pour la communication avec le dispositif de réseau (130).

12. Dispositif de réseau (130) selon la revendication 11, dans lequel les informations de validité indiquent une zone dans laquelle l'identité de capacité respective est valide.

13. Dispositif de réseau (130) selon l'une quelconque des revendications 8 à 12, dans lequel les moyens sont en outre configurés pour recevoir (410) les informations de capacité pendant une procédure de transfert intercellulaire du dispositif terminal, et
dans lequel le dispositif de réseau (130) est un dispositif de réseau cible pour la procédure de transfert intercellulaire, et le dispositif de réseau supplémentaire (120) est un dispositif de réseau source pour la procédure de transfert intercellulaire.

14. Dispositif terminal (140), comprenant des moyens pour :
maintenir (610) une liste d'identités de capacité, chaque entrée dans la liste d'identités de capacité indiquant au moins une identité de capacité utilisée par le dispositif terminal (140) antérieurement à une identité de capacité actuelle utilisée par le dispositif terminal, l'identité de capacité représentant une capacité du dispositif terminal ; et
transmettre (620) la liste d'identités de capacité à un dispositif de réseau (120, 130).

15. Dispositif terminal (140) selon la revendication 14, dans lequel les moyens sont en outre configurés pour effectuer :
la transmission de la liste d'identités de capacité au dispositif de réseau (120, 130) en réponse à au moins l'un parmi :
la réception d'une requête pour le rapport de capacité du dispositif terminal, ou
l'établissement d'une nouvelle connexion avec le dispositif de réseau (120, 130).
